# EUROPEAN PATENT APPLICATION

(11) **EP 3 388 729 A1**
(43) Date of publication of application: **17.10.2018**
(21) Application number: 16872596.8
(22) Date of filing: 29.11.2016
(51) Int. Cl.: F16L 59/065, F25D 23/06

(54) **VACUUM HEAT INSULATOR, HEAT INSULATION DEVICE PROVIDED WITH SAME, AND METHOD FOR MANUFACTURING VACUUM HEAT INSULATOR**

(30) Priority: 09.12.2015 JP 2015239866
(71) Applicant: Panasonic Intellectual Property Management Co., Ltd., Osaka-shi, Osaka 540-6207 (JP)
(72) Inventor: KAWARAZAKI, Hideji, Osaka-shi, Osaka 540-6207 (JP); HIRANO, Toshiaki, Osaka-shi, Osaka 540-6207 (JP); KITANO, Tomoaki, Osaka-shi, Osaka 540-6207 (JP)
(74) Representative: Eisenführ Speiser
(86) International application number: PCT/JP2016/004988
(87) International publication number: WO 2017/098694

(57) **Abstract**

A vacuum heat insulator includes core material (203), first member (201) having a box shape with opening (204), core material (203) being disposed in first member (201), and second member (202) that tightly closes opening (204). First member (201) includes first resin layer (21), second resin layer (22), and gas barrier layer (23), first resin layer (21) and second resin layer (22) being made of thermoplastic resin, gas barrier layer (23) being disposed between first resin layer (21) and second resin layer (22) and containing organic resin and scaly inorganic material. A content of the scaly inorganic material in gas barrier layer (23) is equal to or less than 14% by weight relative to a gross weight of gas barrier layer (23).

## Description

### TECHNICAL FIELD

The present disclosure relates to a vacuum heat insulator, a heat insulation device provided with the vacuum heat insulator, and a method for manufacturing a vacuum heat insulator.

### BACKGROUND ART

Energy saving has recently been highly demanded for prevention of global warming, and household electric appliances have also been required to urgently achieve energy saving. A heat and cold insulation device such as a refrigerator, a freezer, a vending machine is particularly required to include a highly heat insulating material for efficient use of heat.

As a heat insulator having an excellent heat insulation property, a vacuum heat insulating structure is known in which a bag made of a multilayer film containing thermoplastic resin, a gas barrier layer, and a heat seal layer is filled with a heat insulating substance (for example, see PTL 1).

However, in such a conventional vacuum heat insulating structure disclosed in PTL 1, the bag made of the multilayer film is filled with the heat insulating substance, which prevents the structure from being molded into a complicated shape. Thus, in a case where the conventional vacuum heat insulating structure is disposed in a heat insulating wall having a complicated solid shape, such as a door of a refrigerator, some areas including end portions in the heat insulating wall are left unfilled with the vacuum heat insulating structure. This requires foamed polyurethane or the like to be disposed in the unfilled areas in the heat insulating wall. Note that PTL 2 discloses an example in which open-cell urethane foam is used.

### Citation List

### Patent Literatures

PTL 1: Japanese Patent No. 4642265
PTL 2: Japanese Patent No. 5310928

### SUMMARY OF THE INVENTION

In light of the foregoing problem, the present disclosure provides a vacuum heat insulator that can follow (fit) a complicated solid shape with sufficient gas barrier and heat insulation properties secured, a heat insulation device provided with the vacuum heat insulator, and a method for manufacturing a vacuum heat insulator.

To be more specific, a vacuum heat insulator according to an example of an exemplary embodiment of the present disclosure includes a core material, a first member having a box shape with an opening, the core material being disposed in the first member, and a second member that tightly closes the opening of the first member. The first member includes a first resin layer, a second resin layer, and a gas barrier layer. The first resin layer and the second resin layer are made of thermoplastic resin, and the gas barrier layer is disposed between the first resin layer and the second resin layer. The gas barrier layer contains organic resin and scaly inorganic material. A content of the scaly inorganic material in the gas barrier layer is greater than 0% by weight and equal to or less than 14% by weight relative to a gross weight of the gas barrier layer.

Such a configuration makes it possible to produce a vacuum heat insulator that follows a complicated solid shape with sufficient gas barrier and heat insulation properties secured.

Furthermore, a heat insulation device according to the example of the exemplary embodiment of the present disclosure includes a heat insulating wall that includes the above-described vacuum heat insulator.

Such a configuration makes it possible to produce a heat insulation device that has high gas barrier and heat insulation properties.

Moreover, a method for manufacturing a vacuum heat insulator according to the example of the exemplary embodiment of the present disclosure includes disposing a gas barrier layer between a first resin layer and a second resin layer to prepare a gas barrier sheet. The first resin layer and the second resin layer are made of thermoplastic resin, and the gas barrier layer contains organic resin and scaly inorganic material, a content of the scaly inorganic material ranging from 2% by weight to 14% by weight. The method for manufacturing the vacuum heat insulator according to the example of the exemplary embodiment of the present disclosure further includes molding the gas barrier sheet by vacuum molding into a first member, the first member having a box shape with an opening, and disposing a core material in an inner space of the first member, and disposing a second member over the opening of the first member and evacuating the inner space of the first member to tightly close the first member.

Such a method makes it possible to manufacture a vacuum heat insulator that can follow a complicated solid shape with sufficient gas barrier and heat insulation properties secured.

### BRIEF DESCRIPTION OF DRAWINGS

FIG. 1 is a cross-sectional view schematically illustrating an overview of a configuration of a heat insulation device according to an example of an exemplary embodiment of the present disclosure.
FIG. 2 is a cross-sectional view schematically illustrating an overview of a configuration of a door of the heat insulation device, illustrated in FIG. 1, according to the example of the exemplary embodiment of the present disclosure.
FIG. 3 is a graph showing a relationship between an amount of scaly inorganic material and oxygen permeability of a sheet prepared by adding the scaly inorganic material to organic resin used in the vacuum heat insulator according to the example of the exemplary embodiment of the present disclosure.
FIG. 4 is a graph showing a relationship between an amount of scaly inorganic material and a heating temperature at which a sheet is molded by vacuum molding, the sheet being prepared by adding the scaly inorganic material to organic resin used in the vacuum heat insulator according to the example of the exemplary embodiment of the present disclosure.
FIG. 5 is a flowchart illustrating a method for manufacturing the vacuum heat insulator according to the example of the exemplary embodiment of the present disclosure.

### DESCRIPTION OF EMBODIMENT

Examples of the exemplary embodiment of the present disclosure will be described below with reference to the drawings. Note that, in all the drawings, identical or equivalent parts are given identical reference numerals, and repeated description may be omitted in the following description of the exemplary embodiment. In addition, only selected constituent elements suitable for describing the following examples of the exemplary embodiment of the present disclosure are illustrated in all the drawings, and the other constituent elements are not illustrated in some of the drawings. The present disclosure is not limited to the following exemplary embodiment.

### (Exemplary embodiment)

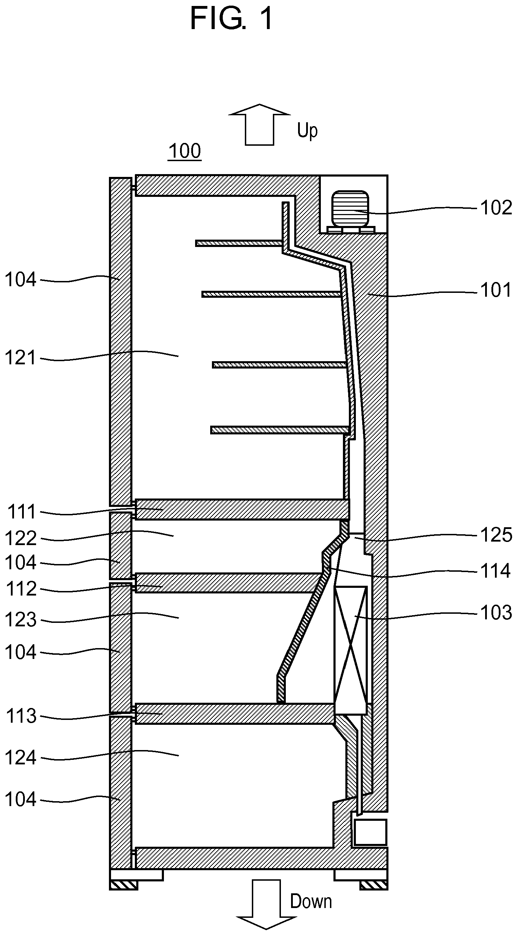

Descriptions will be given below of respective examples of a vacuum heat insulator, a heat insulation device provided with the vacuum heat insulator, and a method for manufacturing the vacuum heat insulator according to the example of the exemplary embodiment of the present disclosure with reference to FIGS. 1 to 5.

### [Configuration of heat insulation device]

FIG. 1 is a cross-sectional view schematically illustrating an overview of a configuration of the heat insulation device according to the example of the exemplary embodiment of the present disclosure. Note that an upper side of FIG. 1 corresponds to an upper side of the heat insulation device and is denoted as "UP". Furthermore, a lower side of FIG. 1 corresponds to a lower side of the heat insulation device and is denoted as "DOWN".

In the present exemplary embodiment, a description will be given of a refrigerator as an example of the heat insulation device. Refrigerator 100 as an example of the heat insulation device according to the present exemplary embodiment includes, as illustrated in FIG. 1, body 101 including a plurality of storage compartments, compressor 102, evaporator 103, and door 104 that opens or closes each of the storage compartments.

Partition walls 111 to 113 partition an inner space of body 101 into the plurality of storage compartments. To be more specific, refrigerating compartment 121 is provided in an upper part of body 101. A storage compartment (not illustrated) and ice-making compartment 122 are provided below refrigerating compartment 121 so as to be arranged side by side in a front view. Furthermore, freezing compartment 123 is provided below the storage compartment and ice-making compartment 122. Vegetable compartment 124 is provided below freezing compartment 123.

Furthermore, body 101 has an opening on a front side of body 101, and door 104 is provided over the opening of body 101. To be more specific, in the present exemplary embodiment, door 104 of a swing type is disposed over refrigerating compartment 121. Door 104 of a drawer type including a rail and the like is disposed over each of ice-making compartment 122, freezing compartment 123, and vegetable compartment 124.

As illustrated in FIG. 1, compressor 102 is disposed on a rear side of the upper part of body 101. Note that, in the present exemplary embodiment, a configuration in which compressor 102 is disposed at the upper part of body 101 is given as an example. However, the present disclosure is not limited to this configuration, and a different configuration in which compressor 102 is disposed at either a central part or a lower part of body 101 may be employed.

Furthermore, cooling compartment 125 is provided on a rear side of the central part of body 101. Cooling compartment 125 is defined by partition wall 114 extending from partition wall 111 to partition wall 113. Evaporator 103 is disposed in cooling compartment 125.

Evaporator 103 is configured to perform heat exchange between refrigerant supplied from compressor 102 and air present within cooling compartment 125. This configuration allows air around evaporator 103 to be cooled, and then causes the air thus cooled to be supplied to refrigerating compartment 121 and the other compartments by, for example, a fan (not illustrated).

In refrigerator 100 as an example of the heat insulation device according to the present exemplary embodiment, at least one of body 101, partition walls 111 to 114, and doors 104 includes a heat insulating wall that houses vacuum heat insulator 200 according to the example of the exemplary embodiment of the present disclosure.

Note that, in the following description, door 104 will be given as an example of the heat insulating wall, and a structure of door 104 will be described. Note that, in a case where at least one of walls of body 101 and partition walls 111 to 114 includes vacuum heat insulator 200 according to the present exemplary embodiment, the configuration is identical to the configuration of door 104 to be described below; thus, the detailed description of the configuration will be omitted.

### [Configuration of vacuum heat insulator]

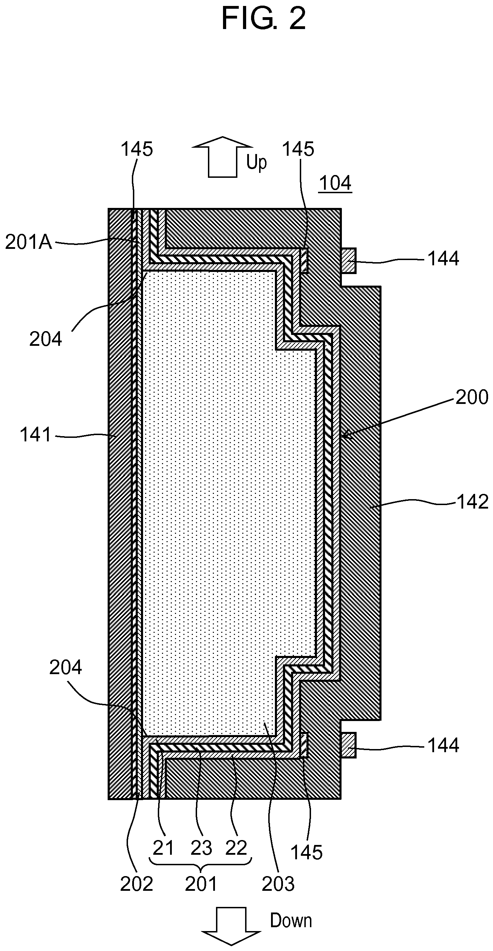

FIG. 2 is a cross-sectional view schematically illustrating an overview of a configuration of the door of the heat insulation device, illustrated in FIG. 1, according to the example of the exemplary embodiment of the present disclosure. Note that, an upper side of FIG. 2 corresponds to the upper side of refrigerator 100 illustrated in FIG. 1 and is denoted as "UP". Furthermore, a lower side of FIG. 2 corresponds to the lower side of refrigerator 100 illustrated in FIG. 1 and is denoted as "DOWN".

As illustrated in FIG. 2, door 104 includes external plate 141, vacuum heat insulator 200 (described below), and inner box 142 that accommodates vacuum heat insulator 200. External plate 141 is bonded to inner box 142 and vacuum heat insulator 200 with adhesive 145.

External plate 141 is a flat plate and is made of, for example, a glass plate or a precoated steel plate. Adhesive 145 is made of, for example, modified silicone. Note that, in the present exemplary embodiment, a configuration in which external plate 141 is bonded to inner box 142 and vacuum heat insulator 200 with adhesive 145 such as modified silicone is employed. However, the present disclosure is not limited to this configuration, and a different configuration may be employed in which adhesive made of, for example, modified polyolefin is applied to at least one of external plate 141, inner box 142, and vacuum heat insulator 200 to bond external plate 141 to inner box 142 and vacuum heat insulator 200.

Inner box 142 has an opening provided on a front side of inner box 142 (corresponding to a left side of FIG. 2), and the opening on the front side of inner box 142 is closed by external plate 141. Furthermore, as illustrated in FIG. 2, gasket 144 is disposed on an outer side of a rear part of inner box 142. In the present exemplary embodiment, gasket 144 is provided at both an upper part and a lower part on the outer side of the rear part of inner box 142.

As illustrated in FIG. 2, the upper part and the lower part on the outer side of the rear part of inner box 142 is each formed in a stepped shape. In addition, adhesive 145 is disposed on a plane where vacuum heat insulator 200 and inner box 142 face each other. Note that adhesive 145 may be applied entirely or partially to the plane where vacuum heat insulator 200 and inner box 142 face each other. In the present exemplary embodiment, as illustrated in FIG. 2, adhesive 145 is applied partially to the plane where vacuum heat insulator 200 and inner box 142 face each other.

In a case where adhesive 145 is applied partially to the plane where vacuum heat insulator 200 and inner box 142 face each other, as illustrated in FIG. 2, adhesive 145 is preferably applied to at least an area facing a position where gasket 144 is disposed. Such a configuration prevents communication (inflow and outflow of air) between an outside and a space between vacuum heat insulator 200 and inner box 142. Accordingly, a heat absorbing load imposed on refrigerator 100 can be further reduced, thereby allowing gas barrier and heat insulation properties of refrigerator 100 to be secured.

Adhesive 145 is made of, for example, modified silicone.

Vacuum heat insulator 200 includes first member 201 having opening 204, second member 202 that tightly closes opening 204, core material 203 disposed in first member 201. Furthermore, vacuum heat insulator 200 is made such that an inner space of a housing formed by first member 201 and second member 202 has a predetermined degree of vacuum.

Flange 201A is formed on an outer periphery of first member 201. First member 201 and second member 202 are bonded and sealed via flange 201A. This configuration allows first member 201 and second member 202 to be in surface press-contact with each other, thereby ensuring rigid bonding and sealing.

First member 201 is molded to an inner shape of inner box 142 so as to have a box shape with opening 204. First member 201 includes first resin layer 21, second resin layer 22, gas barrier layer 23 disposed between first resin layer 21 and second resin layer 22.

First resin layer 21 and second resin layer 22 are made of thermoplastic resin, such as polyolefin including polyethylene and polypropylene. Note that respective materials of first resin layer 21 and second resin layer 22 may be identical to or different from each other.

Gas barrier layer 23 contains organic resin and scaly inorganic material. Examples of the organic resin constituting gas barrier layer 23 include an ethylene-vinyl alcohol copolymer and a polyvinyl alcohol copolymer. On the other hand, examples of the scaly inorganic material include montmorillonite that is a main component of bentonite, which is one of natural clay minerals, montmorillonite subjected to ion exchange, and synthetic silica. In order to secure a sufficient gas barrier property of gas barrier layer 23 (in order to sufficiently suppress oxygen permeability), the scaly inorganic material preferably has a thickness of 1 nm or greater, or an average particle diameter of 100 nm or greater. Furthermore, in order to mold a sheet constituting gas barrier layer 23 into a predetermined shape by vacuum molding, the scaly inorganic material preferably has a thickness of 3 nm or less, or an average particle diameter of 300 nm or less.

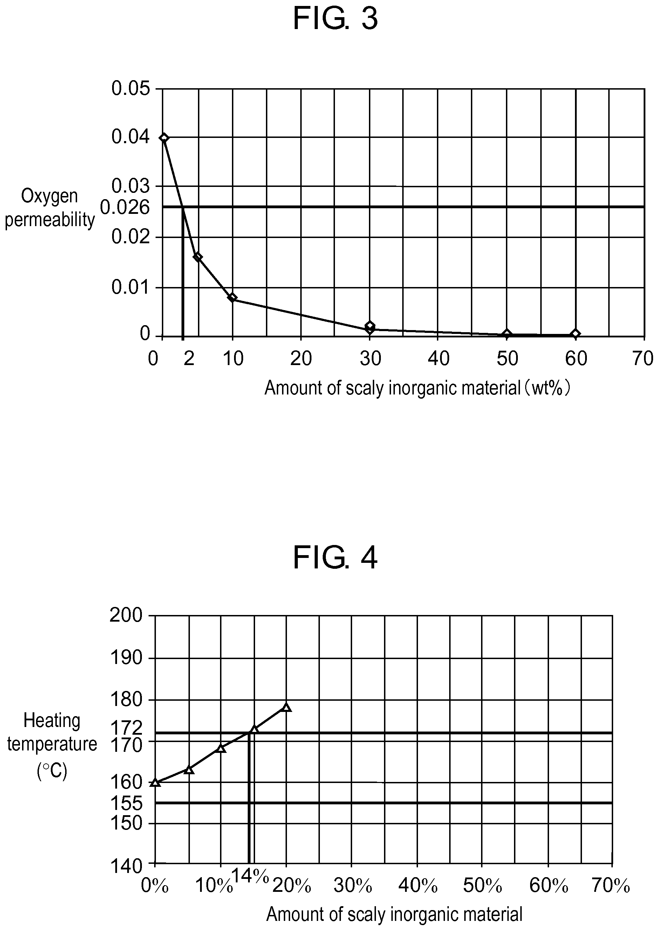

Furthermore, a content of the scaly inorganic material in gas barrier layer 23 is preferably greater than 0% by weight and equal to or less than 14% by weight relative to a gross weight of gas barrier layer 23. More preferably, the content of the scaly inorganic material in gas barrier layer 23 ranges from 2% by weight to 14% by weight, inclusive. A description will be given of the content of the scaly inorganic material below with reference to FIG. 3 and FIG. 4.

FIG. 3 is a graph showing a relationship between an amount of the scaly inorganic material and oxygen permeability of a sheet prepared by adding the scaly inorganic material to organic resin used in the vacuum heat insulator according to the example of the exemplary embodiment of the present disclosure. FIG. 4 is a graph showing a relationship between an amount of the scaly inorganic material and a heating temperature at which a sheet is molded by vacuum molding, the sheet being prepared by adding the scaly inorganic material to organic resin used in the vacuum heat insulator according to the example of the exemplary embodiment of the present disclosure.

In the present exemplary embodiment, the organic resin is an ethylene-vinyl alcohol copolymer, and the scaly inorganic material is montmorillonite. Furthermore, in the present exemplary embodiment, the sheet constituting gas barrier layer 23 is prepared so as to have a thickness of 200 µm.

FIG. 3 clearly shows that an increase in the content of the scaly inorganic material in gas barrier layer 23 lowers the oxygen permeability and achieves a sufficient decrease in oxygen permeability. Herein, assuming that the oxygen permeability required to keep a heat insulation property of vacuum heat insulator 200 for 10 years or more is equal to or less than 0.026 ml/m²·day·atm at 23°C, FIG. 3 clearly shows that the content of the scaly inorganic material needs to be equal to or greater than 2% by weight relative to the gross weight of the gas barrier layer 23. Note that the oxygen permeability required to keep the heat insulation property of vacuum heat insulator 200 for 10 years or more has been found in development of vacuum heat insulator 200 by the inventors.

In contrast, FIG. 4 shows that the increase in the content of the scaly inorganic material in gas barrier layer 23 increases the heating temperature required for molding the sheet by vacuum molding. Herein, in a case where at least one of first resin layer 21 and second resin layer 22 is made of thermoplastic resin, such as polypropylene, a range of the heating temperature required for vacuum molding of polypropylene is 155°C to 172°C. Thus, in the case where at least one of first resin layer 21 and second resin layer 22 is made of, for example, polypropylene, heating first member 201 to 172°C or more may make it difficult to mold first member 201 into a predetermined shape.

Therefore, in order to mold first member 201 into the predetermined shape by vacuum molding, the content of the scaly inorganic material is preferably equal to or less than 14% by weight relative to the gross weight of gas barrier layer 23 as shown in FIG. 4.

Note that, in the present exemplary embodiment, in order to keep the heat insulation property of vacuum heat insulator 200 for 10 years or more, gas barrier layer 23 is designed to have a thickness ranging from 100 µm to 300 µm, inclusive. An increase in the thickness of gas barrier layer 23 enhances the gas barrier property, but also increases material cost. Therefore, it is desired that securing the gas barrier property and decreasing the material cost be well balanced. According to the present disclosure, it has been found that a desired balance between securing the gas barrier property and decreasing the material cost is achieved by an appropriate content of the scaly inorganic material, and the thickness is determined in accordance with the desired balance.

Second member 202 is configured to tightly close opening 204 of first member 201. Second member 202 may be a laminated film, for example. The laminated film may be made of thermoplastic resin such as a low density polyethylene film, a linear low density polyethylene film, a medium density polyethylene film, a high density polyethylene film, a polypropylene film, and a polyacrylonitrile film, or a mixture of these films.

Furthermore, the laminated film may contain a metal layer made of, for example, aluminum or stainless steel. In this case, the metal layer may be formed in or on the laminated film. Furthermore, the metal layer may be metal foil such as aluminum foil. Alternatively, the metal layer may be formed by vapor deposition of aluminum or the like on the laminated film.

Core material 203 may be made of, for example, open-cell urethane foam. In this case, core material 203 is formed into a shape substantially identical to a shape defined by inner surfaces (inner space) of first member 201. Known open-cell urethane foam may be used. For example, open-cell urethane foam having features disclosed in PTL 2 may be used. Note that the features disclosed in PTL 2 include a feature in which powder that lacks an affinity for open-cell urethane foam is dispersed in open-cell urethane foam. The use of such powder allows all cells in open-cell urethane foam including a skin layer to communicate with each other, which enables evacuation.

Furthermore, core material 203 may be made of, for example, glass fibers, rock wool, alumina fibers, or polyethylene terephthalate fibers.

Note that, in the inner space of first member 201, only core material 203 may be disposed, or both core material 203 and an adsorbent may be disposed. Examples of such an adsorbent include a moisture adsorbent that adsorbs and removes moisture and a gas adsorbent that adsorbs gas such as atmospheric gas.

The moisture adsorbent may be made of, for example, a chemical adsorption substance such as calcium oxide or magnesium oxide, or a physical adsorption substance such as zeolite. Furthermore, the gas adsorbent includes an adsorption material and a container that houses the adsorption material, the adsorption material having a property of adsorbing non-condensable gas contained in gas.

Examples of the adsorption material include an alloy composed of zirconium, vanadium, and tungsten, an alloy composed of iron, manganese, yttrium, lanthanum, and one of rare-earth elements, Ba-Li alloy, and zeolite subjected to ion exchange with metal ion.

### [Method for manufacturing vacuum heat insulator]

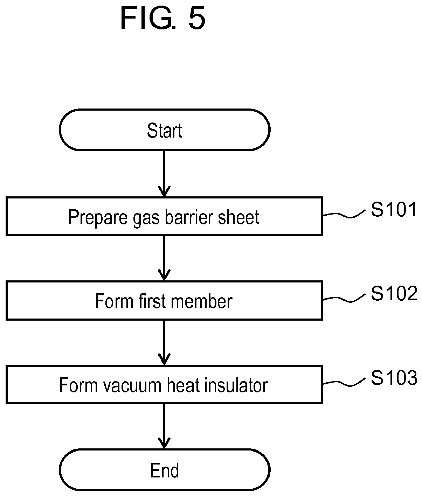

FIG. 5 is a flowchart illustrating a method for manufacturing the vacuum heat insulator according to the example of the exemplary embodiment of the present disclosure.

As illustrated in FIG. 5, a gas barrier sheet is prepared first (step S101). Herein, the gas barrier sheet includes first resin layer 21, second resin layer 22, both of which are made of thermoplastic resin, and gas barrier layer 23 that is disposed between first resin layer 21 and second resin layer 22. Gas barrier layer 23 contains organic resin, and scaly inorganic material, a content of which is 2% by weight to 14% by weight.

To be more specific, in step S101, the gas barrier sheet is produced by the steps of preparing respective sheets of first resin layer 21, second resin layer 22, and gas barrier layer 23, stacking the sheets, and bonding the sheets to each other by, for example, thermocompression bonding.

In a case where first resin layer 21 and second resin layer 22 are made of, for example, polypropylene, a known cast polypropylene film or the like is used. Furthermore, a sheet or film corresponding to gas barrier layer 23 is prepared by adding 2% by weight to 14% by weight of montmorillonite, which is an example of scaly inorganic material, to an ethylene-vinyl alcohol copolymer, which is an example of organic resin, in accordance with a known preparing method. Note that the montmorillonite may have a thickness of 1 nm to 3 nm and an average particle diameter of 100 nm to 300 nm.

Next, in step S102, the gas barrier sheet prepared in step S101 is molded into a shape substantially identical to the shape defined by the inner faces (inner space) of inner box 142 by, for example, vacuum molding, air pressure molding, or hot press molding, which results in first member 201 having a box shape with opening 204.

Next, in step S103, vacuum heat insulator 200 is formed. To be more specific, in step S103, core material 203 is disposed in the inner space of first member 201 prepared in step S102, second member 202 is disposed so as to cover opening 204 of first member 201, and first member 201 and second member 202 are heat-fused to each other. Then, the inner space of first member 201 is evacuated, and first member 201 is tightly closed, which results in vacuum heat insulator 200.

Note that in a case where core material 203 is made of open-cell urethane foam, a configuration may be employed in which core material 203 is first molded into a shape substantially identical to the shape of the inner space of first member 201, and then core material 203 thus molded is put into first member 201. Alternatively, in a case where core material 203 is made of, for example, glass fibers, rock wool, alumina fibers, or polyethylene terephthalate fibers, a configuration may be employed in which the fibers are molded by heat and compression molding, and then the fibers thus molded is disposed in the inner space of first member 201. At this time, an adsorbent may be disposed.

For vacuum heat insulator 200 according to the present exemplary embodiment thus configured and the heat insulation device (refrigerator 100) provided with vacuum heat insulator 200, the gas barrier sheet made of first resin layer 21, second resin layer 22, and gas barrier layer 23 is molded by vacuum molding, which results in first member 201. Even when a member of the heat insulation device (for example, a heat insulating wall) that houses vacuum heat insulator 200 has a complicated solid shape, this configuration allows vacuum heat insulator 200 to follow (fit) the solid shape. Accordingly, the manufacturing step can be simplified as compared with that of a heat insulation device, such as a refrigerator, provided with a conventional vacuum heat insulating structure, which makes it possible to reduce manufacturing cost.

Furthermore, for vacuum heat insulator 200 according to the present exemplary embodiment and the heat insulation device provided with vacuum heat insulator 200, gas barrier layer 23 is made such that the content of scaly inorganic material, which constitutes gas barrier layer 23, in gas barrier layer 23 is 2% by weight to 14% by weight relative to the gross weight of gas barrier layer 23. Such a configuration makes it possible to mold the gas barrier sheet into a complicated solid shape with a sufficient gas barrier property secured.

Moreover, for vacuum heat insulator 200 according to the present exemplary embodiment and the heat insulation device provided with vacuum heat insulator 200, gas barrier layer 23 contains scaly inorganic material having a thickness of 1 nm to 3 nm and an average particle diameter of 100 nm to 300 nm. Such a configuration makes it possible to achieve a high gas barrier property even when the amount of scaly inorganic material added to gas barrier layer 23 is as little as 2% by weight.

Furthermore, for vacuum heat insulator 200 according to the present exemplary embodiment and the heat insulation device provided with vacuum heat insulator 200, first member 201 of vacuum heat insulator 200 includes first resin layer 21 and second resin layer 22 that are made of, for example, polypropylene, and gas barrier layer 23 that is made by adding scaly inorganic material to organic resin and is interposed between first resin layer 21 and second resin layer 22. Such a configuration allows first resin layer 21 and second resin layer 22 that are made of, for example, polypropylene having low moisture permeability to protect the organic resin of gas barrier layer 23 that has poor resistance to moisture, thereby enhancing durability of first member 201.

Note that, for vacuum heat insulator 200 according to the present exemplary embodiment, an aspect in which first member 201 is formed into a box shape with opening 204 has been given as an example, but first member 201 is not limited to this shape. For example, first member 201 may be molded, by, for example, blow molding, into a housing having a predetermined shape that defines almost a whole contour of vacuum heat insulator 200. In this case, vacuum heat insulator 200 may be made by the steps of filling the housing with open-cell urethane foam that becomes a core material, evacuating the housing, and sealing opening 204. According to such a configuration and a manufacturing method, vacuum heat insulator 200 can be used for a heat insulating wall having irregular shapes on both sides of the heat insulating wall, which makes it possible to increase applicability of vacuum heat insulator 200 to heat insulation devices.

Furthermore, in the present exemplary embodiment, an aspect in which vacuum heat insulator 200 is covered by inner box 142 that is a separated member has been given as an example, but the present disclosure is not limited to this aspect. For example, with first member 201 of vacuum heat insulator 200 inserted in a mold, inner box 142 may be molded by injection molding. This eliminates the need for adhesive 145 and allows inner box 142 to replace second resin layer 22 of vacuum heat insulator 200.

As described above, for an insulation device (refrigerator 100) according to the present exemplary embodiment, vacuum heat insulator 200 is formed so as to fit an irregular shape of the inside of the heat insulating wall (door 104), which allows vacuum heat insulator 200 to be disposed with no gap in the heat insulating wall having the irregular shape. This eliminates the need for combining a flat vacuum heat insulating material and foamed urethane in a conventional manner and can enhance respective heat insulation properties of the heat insulating wall (door 104) and the heat insulation device (refrigerator 100) provided with the heat insulating wall.

Furthermore, in a case where vacuum heat insulator 200 has a heat insulation property that is almost the same as a conventional heat insulation property, the thickness of door 104 can be reduced, which makes it possible to increase an internal volume of the heat insulation device (refrigerator 100).

As described above, vacuum heat insulator 200 according to an example of the exemplary embodiment of the present disclosure includes core material 203, first member 201, and second member 202. First member 201 has a box shape with opening 204 and has core material 203 disposed in first member 201, and second member 202 tightly closes opening 204 of first member 201. First member 201 includes first resin layer 21 and second resin layer 22 that are made of thermoplastic resin, and gas barrier layer 23 disposed between first resin layer 21 and second resin layer 22. Gas barrier layer 23 contains organic resin and scaly inorganic material. The content of the scaly inorganic material in gas barrier layer 23 is greater than 0% by weight and equal to or less than 14% by weight relative to the gross weight of gas barrier layer 23.

Such a configuration makes it possible to produce a vacuum heat insulator that follows a complicated solid shape with sufficient gas barrier and heat insulation properties secured.

Furthermore, for vacuum heat insulator 200 according to the example of the exemplary embodiment of the present disclosure, the content of the scaly inorganic material in gas barrier layer 23 may range from 2% by weight to 14% by weight, inclusive, relative to the gross weight of gas barrier layer 23.

Such a configuration makes it possible to produce a vacuum heat insulator that follows a complicated solid shape with sufficient gas barrier and heat insulation properties secured.

Furthermore, for vacuum heat insulator 200 according to the example of the exemplary embodiment of the present disclosure, the organic resin may be an ethylene-vinyl alcohol copolymer or a polyvinyl alcohol copolymer.

Furthermore, for vacuum heat insulator 200 according to the example of the exemplary embodiment of the present disclosure, core material 203 may be made of open-cell urethane foam.

Furthermore, heat insulation device 100 according to the example of the exemplary embodiment of the present disclosure is provided with heat insulating wall (door 104) that houses any one of the above-described vacuum heat insulators 200.

Such a configuration makes it possible to produce a heat insulation device that has high gas barrier and heat insulation properties.

Furthermore, the method for manufacturing vacuum heat insulator 200 according to the example of the exemplary embodiment of the present disclosure includes disposing gas barrier layer 23 between first resin layer 21 and second resin layer 22 to prepare a gas barrier sheet. First resin layer 21 and second resin layer 22 are made of thermoplastic resin, and gas barrier layer 23 contains organic resin, and scaly inorganic material, a content of the scaly inorganic material ranging from 2% by weight to 14% by weight. The method for manufacturing vacuum heat insulator 200 according to the example of the exemplary embodiment of the present disclosure further includes molding the gas barrier sheet by vacuum molding into first member 201 having a box shape with opening 204, and disposing core material 203 in an inner space of first member 201, and disposing second member 202 over opening 204 and evacuating the inner space of first member 201 to tightly close first member 201.

Such a method makes it possible to manufacture a vacuum heat insulator that can follow a complicated solid shape with sufficient gas barrier and heat insulation properties secured.

The above descriptions will make many modifications and other exemplary embodiments of the present disclosure apparent to those skilled in the art. Thus, the descriptions are to be construed only as examples, and are provided for the purpose of teaching those skilled in the art a preferred aspect of the present disclosure. Details of the structures and the functions can be substantially changed without departing from the gist of the present disclosure. Furthermore, various applications within the scope of the claims can be practiced by using appropriate combinations of a plurality of constituent elements disclosed in the exemplary embodiment.

### INDUSTRIAL APPLICABILITY

The present disclosure provides a vacuum heat insulator, a heat insulation device provided with the vacuum heat insulator, and a manufacturing method, the vacuum heat insulator being able to follow a complicated solid shape with sufficient gas barrier and heat insulation properties secured. Accordingly, the present disclosure is widely applicable to, for example, a refrigerator and other heat insulation devices.

### REFERENCE MARKS IN THE DRAWINGS

- 21: first resin layer
- 22: second resin layer
- 23: gas barrier layer
- 100: heat insulation device (refrigerator)
- 101: body
- 102: compressor
- 103: evaporator
- 104: heat insulating wall (door)
- 111, 112, 113, 114: partition wall
- 121: refrigerating compartment
- 122: ice-making compartment
- 123: freezing compartment
- 124: vegetable compartment
- 125: cooling compartment
- 141: external plate
- 142: inner box
- 144: gasket
- 145: adhesive
- 200: vacuum heat insulator
- 201: first member
- 201A: flange
- 202: second member
- 203: core material
- 204: opening

## Claims

1. A vacuum heat insulator comprising:
a core material;
a first member having a box shape with an opening, the core material being disposed in the first member; and
a second member that tightly closes the opening,
wherein the first member includes a first resin layer, a second resin layer, and a gas barrier layer, the first resin layer and the second resin layer being made of thermoplastic resin, the gas barrier layer being disposed between the first resin layer and the second resin layer,
the gas barrier layer contains organic resin and scaly inorganic material, and
a content of the scaly inorganic material in the gas barrier layer is greater than 0% by weight and equal to or less than 14% by weight relative to a gross weight of the gas barrier layer.

2. The vacuum heat insulator according to claim 1, wherein the content of the scaly inorganic material in the gas barrier layer ranges from 2% by weight to 14% by weight, inclusive, relative to the gross weight of the gas barrier layer.

3. The vacuum heat insulator according to claim 1 or 2, wherein the organic resin is an ethylene-vinyl alcohol copolymer or a polyvinyl alcohol copolymer.

4. The vacuum heat insulator according to claims 1 to 3, wherein the core material is open-cell urethane foam.

5. A heat insulation device comprising a heat insulating wall that houses the vacuum heat insulator according to any one of claims 1 to 4.

6. A method for manufacturing a vacuum heat insulator, the method comprising:
disposing a gas barrier layer between a first resin layer and a second resin layer to prepare a gas barrier sheet, the first resin layer and the second resin layer being made of thermoplastic resin, the gas barrier layer containing organic resin and scaly inorganic material, a content of the scaly inorganic material ranging from 2% by weight to 14% by weight relative to a gross weight of the gas barrier layer;
molding the gas barrier sheet by vacuum molding into a first member, the first member having a box shape with an opening; and
disposing a core material in an inner space of the first member, and disposing a second member over the opening of the first member and evacuating the inner space of the first member to tightly close the first member.
